(19) **Europäisches Patentamt**

**European Patent Office**

**Office européen des brevets**

(11) **EP 0 833 036 B1**

(12) **FASCICULE DE BREVET EUROPEEN**

(45) Date de publication et mention
de la délivrance du brevet:
**04.05.2005 Bulletin 2005/18**

(51) Int Cl.⁷: **E21B 43/10**

(21) Numéro de dépôt: **97402204.8**

(22) Date de dépôt: **23.09.1997**

(54) **Préforme souple dépliable comprenant une composition thermodurcissable.**

Flexibel, entfaltbare Vorform auf Basis einer wärmehärtbaren Zusammensetzung

Flexible, unfoldable preform comprising a thermosettable composition

(84) Etats contractants désignés:
**DE FR GB IT NL**

(30) Priorité: **30.09.1996 FR 9611990**

(43) Date de publication de la demande:
**01.04.1998 Bulletin 1998/14**

(73) Titulaire: **Institut Français du Pétrole**
**92852 Rueil-Malmaison Cedex (FR)**

(72) Inventeurs:
• **Mariaggi, Paul**
**38200 Seyssuel (FR)**
• **Jacquemin-Hauviller, Frédérique**
**69230 Saint Genis Laval (FR)**
• **Delhomme, Henri**
**69110 Sainte Foy Les Lyons (FR)**
• **Audigier, Dominique**
**69390 Vourles (FR)**

(56) Documents cités:
| EP-A- 0 122 149 | EP-A- 0 159 482 |
| EP-A- 0 594 156 | WO-A-91/18180 |
| WO-A-94/25655 | FR-A- 1 378 591 |
| FR-A- 1 562 289 | FR-A- 2 487 371 |
| GB-A- 803 547 | US-A- 3 179 168 |
| US-A- 3 297 092 | US-A- 5 080 740 |

**Description**

La présente invention concerne une préforme souple dépliable radialement pour former après déploiement une structure tubulaire durcissable après mise en place dans un puits ou une canalisation dont elle épouse la forme, pour y constituer un tubage le plus souvent sensiblement cylindrique.

On connaît déjà des préformes dont les parois sont en matériau souple, susceptible d'être replié sur elle même de manière à présenter un encombrement radial nettement plus faible que le diamètre du puits ou de la canalisation à tuber ou à chemiser, dans le cas d'une réparation localisée au sein du puits ou du tube. La préforme est introduite dans le puits ou dans la canalisation à l'état replié, puis une fois positionné à l'endroit voulu, on la déplie par déformation radiale vers l'extérieur, par exemple par introduction à l'intérieur de la préforme d'un fluide de gonflage tel qu'un gaz ou un liquide par exemple. Sous l'effet de la pression appliquée elle épouse alors la forme du puits ou de la canalisation. Ces préformes comprennent habituellement une résine durcissable à chaud. Généralement cette résine fait partie de la paroi constitutive de la préforme et a très souvent été introduite par imprégnation des fibres formant cette paroi. Le durcissement de la résine par polymérisation à chaud peut être dû à la température régnant dans le puits, mais habituellement il est provoqué soit par introduction d'un fluide chaud à l'intérieur de la préforme, soit par effet joule au moyen de résistances électriques appropriées disposées dans la préforme, par exemple de fils électriques faisant partie de l'armature de la paroi de la préforme, imprégnée de résine thermodurcissable. Il est également possible d'utiliser le dégagement de chaleur provoqué par une réaction exothermique que l'on déclenche à l'intérieur de la préforme, le plus souvent par mise en contact des réactifs au moment voulu.

On connaît le document FR-A-2 487 371, qui décrit une composition résineuse utilisable pour la fabrication de structures fibreuses préimprégnées comprenant une résine époxyde et de la diéthyltoluylènediamine comme agent durcisseur. La composition est stable à la conservation et donne des pièces durcies ayant de bonnes propriétés mécaniques à faible reprise d'eau. Le liant peut servir à fabriquer des corps creux, par exemple des tubes et d'une matière pleine à armature de fibres de renforcement.

La préforme selon la présente invention peut être mise en place et ancrée sans qu'il soit nécessaire d'utiliser un ciment. Au sens de la présente invention, on désigne par préforme souple tout assemblage, possédant de préférence un système de chauffage intégré, permettant de maintenir dans un milieu confiné entre des peaux extérieures et intérieures en matériau élastique une résine thermodurcissable. De telles préformes sont par exemple décrites dans les documents de brevet FR-A-2 722 239, WO-A-94/21887, WO-A-91/18 180 et WO-A-94/25 655. L'enseignement de ces brevets doit être considéré comme partie intégrante de la présente description du seul fait de leur mention.

Ces préformes doivent comporter une résine thermodurcissable ayant des caractéristiques particulières. Il est en effet nécessaire, en particulier pour leur utilisation dans des puits et notamment des puits pétroliers, que la résine utilisée confère à la préforme des propriétés mécaniques élevées, une résistance au vieillissement hydrothermique et chimique importante, et une reprise en eau la plus faible possible et une latence la plus élevée possible permettant le stockage et le transport de la préforme avant sa mise en place sans que la réaction de polymérisation commence ou ait un avancement trop grand.

Les compositions thermodurcisables mises en jeu dans les préformes de la présente invention sont à latence améliorée, à faible reprise d'eau, ont une transition vitreuse d'au moins 100°C, de préférence d'au moins 120°C et souvent d'au moins 140°C et comprennent au moins une résine époxyde formée à partir d'au moins un polyépoxyde contenant dans sa molécule au moins deux groupes époxydes et d'au moins une polyamine aromatique comportant dans sa molécule au moins deux groupes amino primaires, au moins un substituant alcanoyle ayant de 1 à 12 atomes de carbone situé en alpha de l'un des groupes amino, le rapport molaire de l'amine à l'époxyde étant tel que, à chaque groupe amino, il corresponde de 1,6 à 2,6 groupes époxydes. Ces compositions thermodurcissables comprennent en outre un contrôleur d'écoulement.

Le choix des polyamines aromatiques que l'on emploie dans le cadre de la présente invention est en particulier guidé par le fait que l'on souhaite avoir des polyamines aromatiques de faible réactivité et de faible solubilité à une température inférieure à environ 90°C, parfois inférieure à environ 40 °C, dans les résines époxy employées. Le choix est également influencé par le fait que ces polyamines aromatiques doivent de préférence procurer une bonne tenue à l'hydrolyse par les enchaînements amines secondaires et tertiaires qu'elle génère par réaction sur le cycle oxirane. Elle doivent également procurer de bonnes propriétés de résistance en température.

Ainsi dans sa forme la plus large, la présente invention concerne une préforme souple dépliable radialement pour former après déploiement une structure tubulaire durcissable après mise en place dans un puits ou une canalisation dont elle épouse la forme, caractérisée en ce qu'elle comprend au moins une résine époxyde formée à partir d'au moins un polyépoxyde contenant dans sa molécule au moins deux groupes époxydes et d'au moins une polyamine aromatique comportant dans sa molécule au moins deux groupes amino primaires, au moins un substituant alcanoyle ayant de 1 à 12 atomes de carbone situé en alpha de l'un des groupes amino, le rapport molaire de l'amine à l'époxyde étant tel que, à chaque groupe amino, il corresponde de 1,6 à 2,6 groupes époxydes.

On connaît dans l'industrie des procédés d'utilisation de polyamines aromatiques comme durcisseurs de certaines résines époxydes telles que par exemple les diverses sortes d'ARALDITES®, les résines EPIKOTES®, les résines dénommées EPON®, la résine obtenue à partir du diglycidyléther du bis-phénol-F (en abrégé ci-après DGEBF) et en particulier de la résine obtenue à partir du diglycidyléther du bis-phénol-A (en abrégé ci-après DGEBA). Dans ces procédés, il est expressément recommandé de dissoudre préalablement l'amine avant imprégnation sur fibre de renfort, par exemple sur fibre de verre, sur fibre de carbone, sur fibre céramique ou sur fibre naturelle ou synthétique. En fait, il est connu de l'homme du métier que pratiquement toute polyamine aromatique peut être employée comme durcisseur de résine époxyde. Il y a donc une sélection non évidente d'un certain nombre limité de polyamines permettant d'obtenir les propriétés requises pour les préformes selon l'invention.

La résine époxyde peut être choisie dans le groupe formé par les résines commerciales citées ci-devant, la résine diglycidyléther du bis-phénol-A ou du bis-phénol-F, la résine de bis-phénol formol, la résine phénol-novolaque, les résines cycloaliphatiques, les résines tri ou tétra-fonctionnelles, les résines formées à partir de triglycidyléther-isocyanurate et/ou de triglycidyléther-cyanurate et/ou de triglycidyl-cyanurate et/ou de triglycidyl-isocyanurate ou les mélanges d'au moins deux de ces résines.

Les résines époxydes obtenues à partir des composés époxydés cités dans le brevet US-A-4 921 047 sont également utilisables dans le cadre de la présente invention. L'enseignement de ce brevet doit être considéré comme partie intégrante de la présente description du seul fait de sa mention.

La résine époxyde que l'on choisit a le plus souvent une viscosité dynamique à 25 °C de 0,04 à 50 Pa.s.

Parmi les amines permettant d'atteindre les spécifications techniques fixées pour les préformes, on peut considérer des. amines aromatiques comportant un seul noyau aromatique. Cependant, on préfère dans l'invention faire appel à des amines aromatiques comportant au moins deux noyaux aromatiques. Dans ce cas, ces amines comportent souvent deux noyaux aromatiques reliés l'un à l'autre par un reste hydrocarboné bivalent substitué ou non substitué comportant de 1 à 18 atomes de carbone. Ces deux noyaux aromatiques sont soit reliés par un groupe alcoyle bivalent, soit reliés l'un à l'autre par un reste hydrocarboné bivalent substitué ou non substitué ayant de 6 à 18 atomes de carbone et comportant un noyau aromatique.

L'amine peut aussi comporter au moins un substituant choisi dans le groupe formé par le fluor, l'iode, le brome et le chlore. Elle comporte de préférence au moins deux substituants alcoyles, chacun étant en alpha de part et d'autre d'un groupe amino.

Dans le cas où les deux noyaux aromatiques sont reliés par un reste alcoyle bivalent, ce reste sera de préférence un groupe méthylidène non substitué, ou substitué par au moins un radical choisi parmi les radicaux alcoyles et les radicaux halogénoalcoyles ayant de 1 à 3 atomes de carbone. Par exemple, ce reste alcoyle sera choisi dans le groupe formé par le groupe méthylidène, le groupe isopropylidène, les groupes halogénoisopropylidènes, le groupe hexafluoroisopropylidène. Dans ce cas, l'amine est de préférence choisie dans le groupe formé par :

- la 4,4'-méthylène-bis(2,6-diméthylaniline) ou M-DMA ;
- la 4,4'-méthylène-bis(2-isopropyl-6-méthyl-aniline) ou M-MIPA ;
- la 4,4'-méthylène-bis(2,6-diéthylaniline) ou M-DEA ;
- la 4,4'-méthylène-bis(2,6-diisopropylaniline) ou M-DIPA ; et
- la 4,4'-méthylène-bis(3-chloro-2,6-diéthylaniline) ou M-CDEA.

Parmi ces amines, la 4,4'-méthylène-bis(2,6-diéthylaniline) et la 4,4'-méthylène-bis(3-chloro-2,6-diéthylaniline) présentent un intérêt particulier.

Dans le cas où l'amine comporte deux noyaux aromatiques qui sont reliés l'un à l'autre par un reste hydrocarboné bivalent substitué ou non substitué ayant de 6 à 18 atomes de carbone et comportant un noyau aromatique, elle sera de préférence choisie dans le groupe formé par:

- la 4,4'-(phénylène-diisopropyl)-bis(2,6-diméthyl-aniline) ;
- la 4,4'-(phénylène-diisopropyl)-bis(2,6-diéthyl-aniline) ;
- la 4,4'-(phénylène-diisopropyl)-bis(2,6-dipropyl-aniline) ;
- la 4,4'-(phénylène-diisopropyl)-bis(2,6-diisopropyl-aniline) ;
- la 4,4'-(phénylène-diisopropyl)-bis(2,6-diméthyl-3-chloro-aniline) ;
- la 4,4'-(phénylène-diisopropyl)-bis(2,6-diéthyl-3-chloro-aniline) ;
- la 4,4'-(phénylène-diisopropyl)-bis(2,6-dipropyl-3-chloro-aniline) ;
- la 4,4'-(phénylène-diisopropyl)-bis(2,6-diisopropyl-3-chloro-aniline) ;
- la 3,3'-(phénylène-diisopropyl)-bis(2,6-diméthyl-aniline) ;
- la 3,3'-(phénylène-diisopropyl)-bis(2,6-diéthyl-aniline) ;
- la 3,3'-(phénylène-diisopropyl)-bis(2,6-dipropyl-aniline) ;
- la 3,3'-(phénylène-diisopropyl)-bis(2,6-diméthyl-3-chloro-aniline) ;
- la 3,3'-(phénylène-diisopropyl)-bis(2,6-diéthyl-3-chloro-aniline),

- la 3,3'-(phénylène-diisopropyl)-bis(2,6-dipropyl-3-chloro-aniline) ;
- la 3,3'-(phénylène-diisopropyl)-bis(2,6-diisopropyl-aniline) ; et
- la 3,3'-(phénylène-diisopropyl)-bis(2,6-diisopropyl-3-chloro-aniline).

Dans une forme particulière de réalisation de l'invention, la préforme comprendra au moins une résine époxyde formée à partir d'au moins un polyépoxyde contenant dans sa molécule au moins deux groupes époxydes et d'au moins deux polyamines aromatiques.

Les compositions doivent répondre aux conditions de mise en oeuvre suivantes, de manière à pouvoir être employées pour la fabrication des préformes souples selon la présente invention :

- être capables de procurer une durée de vie en pot (stockage) ou sur fibres de renfort, par exemple fibres de verre ou équivalent, égale ou supérieure à 20 jours, habituellement d'environ 30 jours à environ 4 mois, et le plus souvent d'environ 30 jours à environ 2 mois et ceci pour une température moyenne de stockage égale ou inférieure à 25 °C, habituellement d'environ 0 °C à environ 15 °C et le plus souvent d'environ 0 °C à environ 5 °C ;

- être capables de procurer après stockage en pot ou sur support dans les conditions décrites ci-dessus une latence résiduelle d'au moins 3 heures, de préférence d'au moins 6 heures à une température d'environ 70°C à environ 90 °C et le plus souvent d'au moins 8 heures à une température d'environ 80 °C. La latence résiduelle sera souvent d'au moins 5 heures à 100°C (ou même à 120°C) et de préférence d'au moins 7 heures à cette température ;

- être capables de procurer après stockage en pot ou sur support pendant une durée d'au moins 90 jours, habituellement d'environ 90 jours à environ 6 mois et le plus souvent d'environ 90 jours à environ 4 mois à une température inférieure ou égale moins 18 °C, habituellement d'environ - 30 °C à environ -18 °C et le plus souvent d'environ -25 °C à environ -18 °C une latence résiduelle d'au moins 8 heures, de préférence d'au moins 10 heures et le plus souvent d'au moins 11 heures à une température d'environ 70 °C à environ 90 °C et le plus souvent d'environ 80 °C ;

- pouvoir être déposées sur supports fibreux tels que par exemple sur fibres de verre, sur fibres de carbone, sur fibres en KEVLAR®, sur fibres ou fils métalliques, sur fibres céramiques ou sur fibres naturelles ou synthétiques de manière classique, que ce soit manuellement ou mécaniquement. Ceci implique le choix de compositions ayant une viscosité dynamique relativement faible permettant une imprégnation de bonne qualité des fibres formant les parois de la préforme. Cette viscosité dynamique sera à la température choisie lors de l'imprégnation des fibres, souvent inférieure à 2500 mPa.s (millipascals seconde) et habituellement d'environ 300 à environ 2500 mPa.s; elle peut être de l'ordre de 1500 mPa.s ;

- respecter les règles d'hygiène et de sécurité ;

- avoir une température de polymérisation compatible avec la résistance à la chaleur des polymères constitutifs des parois de la préforme c'est-à-dire le plus souvent une température de polymérisation inférieure ou égale à environ 170 °C et souvent inférieure ou égale à environ 160 °C ;

- avoir une durée de polymérisation la plus réduite possible à la température de polymérisation souhaitée, par exemple une durée de polymérisation à 140 °C d'au plus 9 heures et de préférence d'au plus 8 heures. Cette durée sera par exemple d'au plus 7 heures à 150 °C ou d'au plus 6 heures à 160°C. Souvent la durée de polymérisation sera d'au plus 6 heures à 150 °C ou d'au plus 5 heures à 160 °C.

Les exigences mentionnées ci-dessus impliquent que les formulations mises en oeuvre ne comportent pas d'accélérateur de polymérisation.

L'absorption d'eau, qui est un critère de sélection important dans le cadre de la présente invention, sera inférieure à 3 % à 80 °C et souvent inférieure à 3 % à 100 °C. Cette absorption sera de préférence inférieure 2 % à ces températures. La latence à 80 °C est en général d'au moins 3 heures.

Par ailleurs, l'absorption de pétrole est en général inférieure à 0,3 % à 100 °C (Fuel API, type II).

Dans la mise en oeuvre de l'invention, les compositions contiennent un contrôleur d'écoulement (en anglais "flow regulator"). Cet ajout permet d'éviter, lors du pressage à chaud de plusieurs couches d'imprégnés, l'écoulement de la résine par essorage et préserve aussi le rapport volumique fibre/matrice, qui est de préférence d'environ 1 : 1. Ce rapport est celui qui permet d'avoir les meilleures propriétés mécaniques sur composites après l'étape de polymérisation. Cet ajout peut être effectué selon deux méthodes principales. On ajoute le contrôleur d'écoulement au moment du mélange de l'époxyde et du durcisseur (donc avant la polymérisation). Le contrôleur d'écoulement est le plus souvent choisi dans le groupe formé par les polymères du type polyéthersulfones, polyamides, polyimides et polyarylsulfones.

La proportion de contrôleur d'écoulement est habituellement d'environ 1 à 15 % en poids par rapport au poids final de la composition. Le mélange de ces polymères peut être effectué à l'aide d'un solvant et, dans ce cas, l'époxyde, le durcisseur et le polymère sont en solution au moment du mélange et le solvant est évaporé après l'imprégnation des parois de la préforme. On peut également travailler sans utilisation de solvant. Dans ce cas, le contrôleur d'écoulement est ajouté en deux phases :

- 1) dissolution dans la résine époxy ; puis
- 2) addition à ce mélange du durcisseur aminé.

Dans le cadre de la présente invention, on peut également ajouter dans la composition un durcisseur très réactif (c'est-à-dire présentant une réactivité supérieure au durcisseur principal et le plus souvent très largement supérieure) en petite proportion, par exemple d'environ 1 à 15 % en poids et souvent d'environ 1 à 10 % en poids par rapport au poids total de la composition. Dans ce cas, ce durcisseur est ajouté au dernier moment, juste avant l'imprégnation et après addition du contrôleur d'écoulement. Ainsi la réaction de réticulation se fera après imprégnation et ne perturbera pas le mouillage du tissu et engendrera une amorce de réseau tridimensionnel à forte viscosité dynamique. Le durcisseur le plus latent ne réagira que plus tard à chaud, par exemple à 80 °C ou plus, et terminera la réticulation de la résine.

Les compositions peuvent comporter une proportion de polyamine aromatique primaire en poids d'environ 20 à environ 60 parties pour 100 parties de résine époxy et le plus souvent d'environ 25 à environ 55 parties pour 100 parties de résine époxy.

Dans le but de montrer les avantages principaux apportés par le choix des formulations qui sont décrites dans les exemples 2, 3, 4, 7, 8 et 9 ci-après (comportant un contrôleur d'écoulement) par rapport à des formulations qui n'en comportent pas (exemples 1, 5 et 6) et par rapport à une formulation connue de l'art antérieur (document de brevet EP-A-211 214) comprenant comme durcisseur la 4,4'-diaminodiphénylsulfone (ou DDS) décrite dans l'exemple comparatif 10 ci-après, on a effectué des tests dont les résultats sont donnés dans le tableau 2 ci-après. Ces tests sont la détermination du temps de gel à trois températures: 80 °C, 90 °C et 100 °C. Le temps de gel est le temps requis pour une température choisie et une composition donnée, pour atteindre un taux d'avancement de la réaction de polymérisation $X_g$. Ce taux d'avancement $X_g$ de la réaction au point de gel est un facteur important car il est lié à un changement majeur rhéologique dû à la transformation irréversible d'un liquide visqueux en un gel viscoélastique. Le temps de gel est mesuré avec un appareil commercialisé sous le nom TROMBOMAT® par la société PRODEMAT et qui est capable de déterminer le passage au point de gel et d'évaluer la réactivité du durcisseur à partir du suivi cinétique de la réaction.

La viscosité dynamique est mesurée à 90°C avec un viscosimètre cône - plan PK100®, commercialisé par la société HAAKE.

La mesure de la transition vitreuse est effectuée avec un appareil KINEMAT® de la société PRODEMAT. La rampe de montée en température est de 2 °C par minute de 20 °C à 250 °C. La transition vitreuse marque le passage de l'état vitreux à l'état caoutchoutique et détermine ainsi la limite d'utilisation en température des résines époxydes décrites dans les exemples 1 à 8. La mesure de la température de la transition vitreuse est effectuée sur des échantillons polymérisés à 140 °C pendant 8 heures.

L'absorption d'eau dans le cas des résines époxydes se traduit par une variation progressive de la rigidité des mailles du réseau réticulé. Cette fixation d'eau entraîne un changement de niveau de la transition vitreuse et favorise la dégradation hydrolytique de la résine époxyde et des interfaces avec les fibres de renfort des parois de la préforme. Il est donc important que les époxydes durcis par les polyamines aromatiques aient des absorption d'eau les plus faibles possibles. Les mesures comparatives d'absorption d'eau sont effectuées sur des éprouvettes de résines de 50 x 25 x 5 millimètre qui ont été au préalable polymérisées 8 heures à 140 °C, puis imprégnées jusqu'à saturation dans de l'eau distillée maintenue à 80 °C. L'absorption d'eau est mesurée par différence de masse à intervalle réguliers jusqu'au moment ou la saturation est atteinte, c'est-à-dire jusqu'à poids constant, ce qui donne le taux de reprise d'eau en pour-cent poids indiqué pour chaque composition des exemples 1 à 8 dans le tableau 2 ci-après.

Il est clair que, de façon surprenante, les compositions ont un taux de reprise d'eau largement inférieur au taux de reprise d'eau de la composition de référence de l'exemple 10 et présentent donc un avantage indéniable.

La présente invention sera mieux comprise et ses avantages apparaîtront plus clairement à la lecture des essais décrits ci-après.

Ces essais sont réalisés avec la résine époxy DGEBA fabriquée et vendue par la société CIBA sous la référence LY 556®. Les principales caractéristiques de la résine sont :

Viscosité dynamique à 25 °C : 12 Pa.s ;
Teneur en époxyde : 1,15 équivalent par kilogramme ; et
Poids spécifique : 1,15 g/cm$^3$.

Afin de respecter la stoechiométrie de la réaction, il est nécessaire de calculer au préalable la quantité théorique de durcisseur à introduire dans le mélange pour 100 grammes de prépolymère époxyde. Cette quantité est aussi appelée "ppcr" (partie en poids pour cent grammes de résine).

$$ppcr = 100 \times \frac{\text{Poids équivalent d'amine(*)}}{\text{Poids équivalent d'époxy(*)}}$$

(*) il s'agit de poids équivalents par hydrogène réactif.

Le poids équivalent du prépolymère époxy est donné par le fournisseur (CIBA): 5,32 g équivalent époxy par kg (soit 1000 : 5,32 = 187,79 g/mole).

La stoechiométrie implique la réaction d'une molécule de prépolymère époxy portant deux groupes époxydes avec deux hydrogènes mobiles de l'amine. Les diamines primaires utilisées dans les exemples possèdent quatre hydrogènes mobiles par molécule. Les quantités d'amines en ppcr pour chaque amine utilisée sont indiquées dans le tableau 1 ci-après.

TABLEAU 1

| Durcisseurs aminés | Masse moléculaire | p.p.c.r |
|---|---|---|
| M-CDEA | 379,38 | 50,5 |
| M-DEA | 310,49 | 41,33 |
| DDS | 248,31 | 33 |

## EXEMPLES

Les exemples ci-après illustrent les compositions thermodurcissables mises en jeu dans les préformes de l'invention sans la limiter. Les Exemples 1, 5, 6 et 10 sont donnés à titre de comparaison.

Les compositions testées sont élaborées comme décrit dans les Exemples 1 à 10 ci-après.

Exemple 1 (comparatif)

50,50 g de M-CDEA sont ajoutés sous agitation dans 100 g de DGEBA chauffée à 90 °C. L'agitation est poursuivie après dissolution complète pendant environ 20 minutes. La température est ensuite abaissée à 4 °C pour conserver la composition. Les propriétés de cette composition sont données dans le tableau 2.

Exemple 2

100 g de DGEBA sont chauffés sous atmosphère inerte à 140 °C. A cette température et sous agitation, on ajoute 12,44 g (soit 8 % pondéral par rapport à la formulation finale) de polysulfone commercialisé par la société AMOCO sous le nom de UDEL®. L'agitation et le chauffage sont maintenus jusqu'à dissolution complète du polymère. Après dissolution, la température de l'ensemble est abaissée à 80 °C. On ajoute alors 50,5 g de M-CDEA jusqu'à dissolution complète et ceci pendant 20 minutes environ. La température de cette formulation est ensuite abaissée entre 20 et 4 °C pour conservation. Les propriétés de cette composition sont données dans le tableau 2.

Exemple 3

100 g de DGEBA sont chauffés sous atmosphère inerte à 180 °C. A cette température et sous agitation, on ajoute 10,88 g (soit 7 % pondéral par rapport à la formulation finale) de polyphenylsulfone commercialisé par la société AMOCO sous le nom de RADEL®. L'agitation et le chauffage sont maintenus jusqu'à dissolution complète du polymère. Après dissolution, la température de l'ensemble est abaissée à 80 °C. On ajoute alors 50,5 g de M-CDEA jusqu'à dissolution complète et ceci pendant 20 minutes environ. La température de cette formulation est ensuite abaissée entre 20 et 4 °C pour conservation. Les propriétés de cette composition sont données dans le tableau 2.

Exemple 4

100 g de DGEBA sont chauffés sous atmosphère inerte à 150 °C. A cette température et sous agitation, on ajoute 12,44 g (soit 8 % pondéral par rapport à la formulation finale) de polyétherimide commercialisé par la société Dupont De Nemours sous le nom de ULTEM 1000®. L'agitation et le chauffage sont maintenus jusqu'à dissolution complète du polymère. Après dissolution, la température de l'ensemble est abaissée à 80 °C. On ajoute alors 50,5 g de M-CDEA jusqu'à dissolution complète et ceci pendant 20 minutes environ. La température de cette formulation est ensuite abaissée entre 20 et 4 °C pour conservation. Les propriétés de cette composition sont données dans le tableau 2.

### Exemple 5 (comparatif)

100 g de DGEBA sont chauffés à 80 °C. A cette température et sous agitation, on ajoute 45,44 g de M-CDEA jusqu'à dissolution (15 minutes environ). La solution ainsi obtenue est refroidie à 40°C. On ajoute alors 3,173 g d'amine cycloaliphatique HY2954 de la société CIBA-GEIGY. La totalité molaire de ces deux amines correspond alors au rapport stoechiométrique idéal. La solution finale est ensuite refroidie entre 20 et 4°C pour conservation. Les propriétés de cette composition sont données dans le tableau 2.

### Exemple 6 (comparatif)

41,33 g de M-DEA sont ajoutés sous agitation dans 100 g de DGEBA chauffée à 80 °C. L'agitation est poursuivie jusqu'à dissolution complète pendant environ 30 minutes. La température est ensuite abaissée à -18 °C pour conserver la composition. Les propriétés de cette composition sont données dans le tableau 2.

### Exemple 7

100 g de DGEBA sont chauffés sous atmosphère inerte à 140 °C. A cette température et sous agitation, on ajoute 12,44 g (soit 8 % pondéral par rapport à la formulation finale) de polysulfone commercialisé par la société AMOCO sous le nom de UDEL®. L'agitation et le chauffage sont maintenus jusqu'à dissolution complète du polymère. Après dissolution, la température de l'ensemble est abaissée à 80 °C. On ajoute alors 41,33 g de M-DEA jusqu'à dissolution complète et ceci pendant 20 minutes environ. La température de cette formulation est ensuite abaissée entre 20 et 4 °C pour conservation. Les propriétés de cette composition sont données dans le tableau 2.

### Exemple 8

100 g de DGEBA sont chauffés sous atmosphère inerte à 180 °C. A cette température et sous agitation, on ajoute 10,88 g (soit 7 % pondéral par rapport à la formulation finale) de polyphénylsulfone commercialisé par la société AMOCO sous le nom de RADEL®. L'agitation et le chauffage sont maintenus jusqu'à dissolution complète du polymère. Après dissolution, la température de l'ensemble est abaissée à 80 °C. On ajoute alors 41,33 g de M-DEA jusqu'à dissolution complète et ceci pendant 20 minutes environ. La température de cette formulation est ensuite abaissée entre 20 et 4°C pour conservation. Les propriétés de cette composition sont données dans le tableau 2.

### Exemple 9

100 g de DGEBA sont chauffés sous atmosphère inerte à 150 °C. A cette température et sous agitation, on ajoute 12,44 g (soit 8 % pondéral par rapport à la formulation finale) de polyetherimide commercialisé par la société Dupont De Nemours sous le nom de ULTEM 1000®. L'agitation et le chauffage sont maintenus jusqu'à dissolution complète du polymère. Après dissolution, la température de l'ensemble est abaissée à 80 °C. On ajoute alors 41,33 g de M-DEA jusqu'à dissolution complète et ceci pendant 20 minutes environ. La température de cette formulation est ensuite abaissée entre 20 et 4°C pour conservation. Les propriétés de cette composition sont données dans le tableau 2.

### Exemple 10 (comparatif)

33,00 g de 4,4'-diaminodiphénylsulfone (DDS) sont ajoutés sous agitation dans 100 g de DGEBA chauffée à 90 °C. L'agitation est poursuivie jusqu'à dissolution complète pendant environ 30 minutes. La température est ensuite abaissée à -18 °C pour conserver la composition. Les propriétés de cette composition sont données dans le tableau 2.

Les résultats des tests de ces compositions sont donnés dans le tableau 2 ci-après. La viscosité mesurée est la viscosité dynamique à 50 °C exprimée en millipascals seconde. La transition vitreuse est en degrés Celsius et l'absorption de l'eau est mesurée comme décrit plus haut, à 80 °C à saturation.

## TABLEAU 2

| Formulations | temps de gel (en heures) | | | Viscosité dynamique à 90 °C (mPa.s) | Transition vitreuse (en °C) | Absorption d'eau (en %) à 100 °C après 10 000 h |
|---|---|---|---|---|---|---|
| | à 80 °C | à 90 °C | à 100 °C | | | |
| M-CDEA | 39 | 22 | 15 | 70 | 151 | 1,92 |
| M-CDEA + UDEL (8%) | 38 | 21 | 14 | 1540 | 153 | 1,9 |
| M-CDEA + RADEL (7%) | 38 | 20 | 13 | 1600 | 150 | 1,9 |
| M-CDEA + ULTEM 1000 (8%) | 36,5 | 19 | 12 | 1600 | 155 | 1,9 |
| M-CDEA + HY2954 (10%) | 22 | 17 | 11 | 1700 | 155 | 1,9 |
| M-DEA | 12 | 8 | | 50 | 155 | 2,0 |
| M-DEA + UDEL (8%) | 11 | 7 | | 1500 | 156 | 1,9 |
| M-DEA + RADEL (7%) | 11 | 7 | | 1450 | 155 | 1,95 |
| M-DEA + ULTEM 1000 (8%) | 11,5 | 7,5 | | 1550 | 157 | 2,0 |
| DDS | 17 | 10 | 6 | 80 | 165 | 3,9 |

Les résultats donnés dans le tableau 2 montrent que les formulations contenant un contrôleur d'écoulement apportent effectivement une augmentation de viscosité dynamique permettant d'éviter un essorage à chaud, sans pour autant perturber les qualités de base apportées par les durcisseurs amines. On notera que la formulation contenant de la DDS absorbe une quantité d'eau supérieure par rapport aux produits de l'invention.

**Revendications**

1.   Préforme souple dépliable radialement pour former après déploiement une structure tubulaire durcissable après mise en place dans un puits ou une canalisation dont elle épouse la forme, **caractérisé en ce qu'**elle comprend une composition thermodurcissable comprenant au moins une résine époxyde formée à partir d'au moins un polyépoxyde contenant dans sa molécule au moins deux groupes époxydes et d'au moins une polyamine aromatique comportant dans sa molécule au moins deux groupes amino primaires, au moins un substituant alcanoyle ayant de 1 à 12 atomes de carbone situé en alpha de l'un des groupes amino, le rapport molaire de l'amine à l'époxyde étant tel que, à chaque groupe amino, il corresponde de 1,6 à 2,6 groupes époxydes, ladite composition thermodurcissable ayant une reprise en eau à saturation inférieure à 3 % à 80 °C et une latence à 80 °C d'au moins 3 heures et contenant un contrôleur d'écoulement.

**2.** Préforme selon la revendication 1 dans laquelle la résine époxyde a une viscosité dynamique à 25 °C de 0,04 à 50 Pa.s.

**3.** Préforme selon l'une des revendications 1 et 2 dans laquelle l'amine comporte au moins un substituant choisi dans le groupe formé par le fluor, l'iode, le brome et le chlore.

**4.** Préforme selon l'une des revendications 1 à 3 dans laquelle l'amine comporte au moins deux substituants alcanoyles chacun étant en alpha de part et d'autre d'un groupe amino.

**5.** Préforme selon l'une des revendications 1 à 4 dans laquelle l'amine comporte un seul noyau aromatique.

**6.** Préforme selon l'une des revendications 1 à 4 dans laquelle l'amine comporte au moins deux noyaux aromatiques.

**7.** Préforme selon la revendication 6 dans laquelle l'amine comporte deux noyaux aromatiques qui sont reliés l'un à l'autre par un reste hydrocarboné bivalent substitué ou non substitué comportant de 1 à 18 atomes de carbone.

**8.** Préforme selon la revendication 6 ou 7 dans laquelle l'amine comporte deux noyaux aromatiques reliés par un groupe alcoyle bivalent.

**9.** Préforme selon l'une des revendications 6 à 8 dans laquelle l'amine comporte deux noyaux aromatiques reliés l'un à l'autre par un groupe méthylidène non substitué, ou substitué par au moins un radical choisi parmi les radicaux alcoyles et les radicaux halogènoalcoyles ayant de 1 à 3 atomes de carbone.

**10.** Préforme selon la revendication 9 dans laquelle les deux noyaux aromatiques sont reliés par un groupe choisi parmi le groupe méthylidène, le groupe isopropylidène, les groupes halogénoisopropylidènes et le groupe hexafluoroisopropylidène.

**11.** Préforme selon l'une des revendications 7 à 10 dans laquelle l'amine est choisie dans le groupe formé par:

- la 4,4'-méthylène-bis(2,6-diméthyl-aniline) ;
- la 4,4'-méthylène-bis(2-isopropyl-6-méthyl-aniline) ;
- la 4,4'-méthylène-bis(2,6-diéthyl-aniline) ;
- la 4,4'-méthylène-bis(2,6-diisopropyl-aniline) ; et
- la 4,4'-méthylène-bis(3-chloro-2,6-diéthyl-aniline).

**12.** Préforme selon la revendication 11 dans laquelle l'amine est choisie dans le groupe formé par la 4,4'-méthylène-bis(2-isopropyl-6-méthyl-aniline) et la 4,4'-méthylène-bis(3-chloro-2,6-diéthyl-aniline).

**13.** Préforme selon l'une des revendications 6 et 7 dans laquelle l'amine comporte deux noyaux aromatiques qui sont reliés l'un à l'autre par un reste hydrocarboné bivalent substitué ou non substitué ayant de 6 à 18 atomes de carbone et comportant un noyau aromatique.

**14.** Préforme selon la revendication 13 dans laquelle l'amine est choisie dans le groupe formé par

- la 4,4'-(phénylène-diisopropyl)-bis(2,6-diméthyl-aniline) ;
- la 4,4'-(phénylène-diisopropyl)-bis(2,6-diéthyl-aniline) ;
- la 4,4'-(phénylène-diisopropyl)-bis(2,6-dipropyl-aniline) ;
- la 4,4'-(phénylène-diisopropyl)-bis(2,6-diisopropyl-aniline) ;
- la 4,4'-(phénylène-diisopropyl)-bis(2,6-diméthyl-3-chloro-aniline) ;
- la 4,4'-(phénylène-diisopropyl)-bis(2,6-diéthyl-3-chloro-aniline) ;
- la 4,4'-(phénylène-diisopropyl)-bis(2,6-dipropyl-3-chloro-aniline) ;
- la 4,4'-(phénylène-diisopropyl)-bis(2,6-diisopropyl-3-chloro-aniline) ;
- la 3,3'-(phénylène-diisopropyl)-bis(2,6-diméthyl-aniline) ;
- la 3,3'-(phénylène-diisopropyl)-bis(2,6-diéthyl-aniline) ;
- la 3,3'-(phénylène-diisopropyl)-bis(2,6-dipropyl-aniline) ;
- la 3,3'-(phénylène-diisopropyl)-bis(2,6-diméthyl-3-chloro-aniline) ;

- la 3,3'-(phénylène-diisopropyl)-bis(2,6-diéthyl-3-chloro-aniline),
- la 3,3'-(phénylène-diisopropyl)-bis(2,6-dipropyl-3-chloro-aniline) ;
- la 3,3'-(phénylène-diisopropyl)-bis(2,6-diisopropyl-aniline) ; et
- la 3,3'-(phénylène-diisopropyl)-bis(2,6-diisopropyl-3-chloro-aniline).

15. Préforme selon l'une des revendications 1 à 14 comprenant au moins une résine époxyde formée à partir d'au moins un polyépoxyde contenant dans sa molécule au moins deux groupes époxydes et d'au moins deux polyamines aromatiques.

**Patentansprüche**

1. Radial ausbreitbare Vorform, um nach Ausbreiten eine härtbare Röhrenstruktur nach Einsetzen in ein Bohrloch oder eine Kanalisation, deren Form sie annimmt, auszubilden, **dadurch gekennzeichnet, dass** sie eine thermohärtbare Zusammensetzung umfasst, umfassend wenigstens ein Epoxidharz, gebildet aus wenigstens einem Polyepoxid, der in seinem Molekül wenigstens zwei Epoxidgruppen enthält und wenigstens einem aromatischen Polyamin, umfassend in seinem Molekül wenigstens zwei primäre Aminogruppen, wenigstens einen Alkanoylsubstituenten mit 1 bis 12 Kohlenstoffatomen in Alphastellung von einer der Aminogruppen, wobei das Molverhältnis Amin zu Epoxid derart ist, dass jede Aminogruppe 1,6 bis 2,6 Epoxidgruppen entspricht, wobei die wärmehärtbare Zusammensetzung eine Wasseraufnahme bei Sättigung unter 3 % bei 80°C und eine Latenz bei 80°C von 3 Stunden hat und einen Fließregulierer enthält.

2. Vorform nach Anspruch 1, in der das Epoxidharz eine dynamische Viskosität bei 25°C von 0,04 bis 50 Pa.s hat.

3. Vorform nach einem der Ansprüche 1 bis 2, bei der das Amin wenigstens einen Substituenten umfasst, gewählt aus der Gruppe, die gebildet wird durch Fluor, Iod, Brom und Chlor.

4. Vorform nach einem der Ansprüche 1 bis 3, bei der das Amin wenigstens zwei Alkanoylsubstituenten umfasst, von denen jeder in Alphastellung von beiden Seiten der Aminogruppe vorliegt.

5. Vorform nach einem der Ansprüche 1 bis 4, bei der das Amin einen einzigen aromatischen Ring umfasst.

6. Vorform nach einem der Ansprüche 1 bis 4, bei der das Amin wenigstens zwei aromatische Ringe umfasst.

7. Vorform nach Anspruch 6, bei der das Amin zwei aromatische Ringe umfasst, die miteinander durch einen Kohlenwasserstoffrest verbunden sind, der bivalent, ggf. substituiert ist und 1 bis 18 Kohlenstoffatome umfasst.

8. Vorform nach Anspruch 6 oder 7, bei der das Amin zwei aromatische Ringe umfasst, die durch eine bivalente Alkoylgruppe verbunden sind.

9. Vorform nach einem der Ansprüche 6 bis 8, bei der das Amin zwei aromatische Ringe umfasst, die miteinander durch eine Methylidengruppe, ggf. substituiert durch wenigstens einen Rest, gewählt unter den Alkoylresten und den Halogenalkoylresten mit 1 bis 3 Kohlenstoffatomen verbunden ist.

10. Vorform nach Anspruch 9, bei der die aromatischen Ringe durch eine Gruppe verbunden sind, die gewählt ist unter Methyliden, Isopropylidengruppe, Halogenisopropylidengruppen und der Hexafluorisopropylidengruppe.

11. Vorform nach einem der Ansprüche 7 bis 10, bei der das Amin gewählt wird aus der Gruppe, die gebildet wird durch:

- 4,4'-Methylen-Bis(2,6-Dimethylanilin);
- 4,4'-Methylen-Bis(2-Isopropyl-6-Methylanilin);
- 4,4'-Methylen-Bis(2,6-Diethylanilin);
- 4,4'-Methylen-Bis(2,6-Diisopropylanilin); und
- 4,4'-Methylen-Bis(3-Chlor-2,6-Diethylanilin).

12. Vorform nach Anspruch 11, bei der das Amin gewählt wird aus der Gruppe, die besteht durch 4,4-Methylen-Bis(2-Isopropyl-6-Methylanilin) und 4,4'-Methylen-Bis(3-Chlor-2,6-Diethylanilin).

13. Vorform nach einem der Ansprüche 6 und 7, bei der das Amin zwei aromatische Ringe umfasst, die miteinander durch einen bivalenten, ggf. substituierten Kohlenwasserstoffrest verbunden sind mit 6 bis 18 Kohlenstoffatomen und einen aromatischen Ring umfassend.

14. Vorform nach Anspruch 13, bei der das Amin gewählt ist aus der Gruppe, die gebildet wird durch:

- 4,4'-(Phenylen-Diisopropyl)-Bis(2,6-Dimethylanilin);
- 4,4'-(Phenylen-Diisopropyl)-Bis(2,6-Diethylanilin);
- 4,4'-(Phenylen-Diisopropyl)-Bis(2,6-Dipropylanilin);
- 4,4'-(Phenylen-Diisopropyl)-Bis(2,6-Diisopropylanilin);
- 4,4'-(Phenylen-Diisopropyl)-Bis(2,6-Dimethyl-3-Chloranilin);
- 4,4'-(Phenylen-Diisopropyl)-Bis(2,6-Diethyl-3-Chloranilin);
- 4,4'-(Phenylen-Diisopropyl)-Bis(2,6-Dipropyl-3.Chloranilin);
- 4,4'-(Phenylen-Diisopropyl)-Bis(2,6-Diisopropyl-3-Chloranilin);
- 3,3'-(Phenylen-Diisopropyl)-Bis(2,6-Dimethylanilin);
- 3,3'-(Phenylen-Diisopropyl)-Bis(2,6-Diethylanilin);
- 3,3'-(Phenylen-Diisopropyl)-Bis(2,6-Dipropylanilin);
- 3,3'-(Phenylen-Diisopropyl)-Bis(2,6-Dimethyl-3-Chloranilin);
- 3,3'-(Phenylen-Diisopropyl)-Bis(2,6-Diethyl-3-Chloranilin);
- 3,3'-(Phenylen-Diisopropyl)-Bis(2,6-Dipropyl-3.Chloranilin);
- 3,3'-(Phenylen-Diisopropyl)-Bis(2,6-Diisopropylanilin); und
- 3,3'-(Phenylen-Diisopropyl)-Bis(2,6-Diisopropyl-3-Chloranilin).

15. Vorform nach einem der Ansprüche 1 bis 14, wenigstens einen Epoxidharz umfassend, das gebildet wird aus wenigstens einem Polyepoxid, das in seinem Molekül wenigstens zwei Epoxidgruppen und wenigstens zwei aromatische Polyamine enthält.

## Claims

1. A radially deployable flexible preform which forms a tubular structure which is hardenable following deployment after positioning in a well or a conduit to mould to its shape, **characterized in that** it comprises at least one thermosetting composition comporising at least one epoxy resin formed from at least one polyepoxide containing at least two epoxy groups in its molecule, and at least one aromatic polyamine containing at least two primary amino groups in its molecule and at least one alkanoyl substituent containing 1 to 12 carbon atoms located in the position alpha to one of the amino groups, the molar ratio of the amine to the epoxide being such that each amine group corresponds to 1.6 to 2.6 epoxy groups, said thermosetting composition having a water take-up at saturation of less than 3% at 80°C and a latency at 80°C of at least 3 hours and containing a flow regulator.

2. A preform according to claim 1, in which the epoxy resin has a dynamic viscosity at 25°C of 0.04 to 50 Pa.s.

3. A preform according to any one of claims 1 and 2, in which the amine comprises at least one substituent selected from the group formed by fluorine, iodine, bromine and chlorine.

4. A preform according to any one of claims 1 to 3, in which the amine comprises at least two alkanoyl substituents, each being alpha to either side of an amino group.

5. A preform according to any one of claims 1 to 4, in which the amine comprises a single aromatic ring.

6. A preform according to any one of claims 1 to 4, in which the amine comprises at least two aromatic rings.

7. A preform according to claim 6, in which the amine contains two aromatic rings which are connected together by a bivalent substituted or unsubstituted hydrocarbon residue containing 1 to 18 carbon atoms.

8. A preform according to claim 6 or claim 7, in which the amine comprises two aromatic rings connected by a bivalent alkoyl group.

9. A preform according to any one of claims 6 to 8, in which the amine comprises two aromatic rings connected together by an unsubstituted methylidene group or by a methylidene group substituted by at least one radical selected from alkoyl radicals and halogenoalkoyl radicals containing 1 to 3 carbon atoms.

10. A preform according to claim 9, in which the two aromatic rings are connected by a group selected from a methylidene group, an isopropylidene group, halogenoisopropylidene groups, and a hexafluoroisopropylidene group.

11. A preform according to any one of claims 7 to 10, in which the amine is selected from the group formed by:

- 4,4'-methylene-bis(2,6-dimethylaniline);
- 4,4'-methylene-bis(2-isopropyl-6-methylaniline);
- 4,4'-methylene-bis(2,6-diethylaniline);
- 4,4'-methylene-bis(2,6-diisopropylaniline); and
- 4,4'-methylene-bis(3-chloro-2,6-diethylaniline).

12. A preform according to claim 11, in which the amine is selected from the group formed by 4,4'-methylene-bis(2-isopropyl-6-methylaniline) and 4,4'-methylene-bis(3-chloro-2,6-diethylaniline).

13. A preform according to to any one of claims 6 and 7, in which the amine comprises two aromatic rings which are connected together by a bivalent substituted or unsubstituted hydrocarbon residue containing 6 to 18 carbon atoms and containing an aromatic ring.

14. A preform according to claim 13, in which the amine is selected from the group formed by:

- 4,4'-(phenylene-diisopropyl)-bis(2,6-dimethylaniline);
- 4,4'-(phenylene-diisopropyl)-bis(2,6-diethylaniline);
- 4,4'-(phenylene-diisopropyl)-bis(2,6-dipropylaniline);
- 4,4'-(phenylene-diisopropyl)-bis(2,6-diisopropylaniline);
- 4,4'-(phenylene-diisopropyl)-bis(2,6-dimethyl-3-chloroaniline);
- 4,4'-(phenylene-diisopropyl)-bis(2,6-diethyl-3-chloroaniline);
- 4,4'-(phenylene-diisopropyl)-bis(2,6-dipropyl-3-chloroaniline);
- 4,4'-(phenylene-diisopropyl)-bis(2,6-diisopropyl-3-chloroaniline);
- 3,3'-(phenylene-diisopropyl)-bis(2,6-dimethylaniline);
- 3,3'-(phenylene-diisopropyl)-bis(2,6-diethylaniline);
- 3,3'-(phenylene-diisopropyl)-bis(2,6-dipropylaniline);
- 3,3'-(phenylene-diisopropyl)-bis(2,6-dimethyl-3-chloroaniline);
- 3,3'-(phenylene-diisopropyl)-bis(2,6-diethyl-3-chloroaniline);
- 3,3'-(phenylene-diisopropyl)-bis(2,6-dipropyl-3-chloroaniline);
- 3,3'-(phenylene-diisopropyl)-bis(2,6-diisopropylaniline); and
- 3,3'-(phenylene-diisopropyl)-bis(2,6-diisopropyl-3-chloroaniline).

15. A preform according to any one of claims 1 to 14, comprising at least one epoxy resin formed from at least one polyepoxide containing at least two epoxy groups in its molecule, and at least two aromatic polyamines.